Europäisches Patentamt

European Patent Office

Office européen des brevets

(11) Veröffentlichungsnummer: **0 235 518**
**A1**

## (12) EUROPÄISCHE PATENTANMELDUNG

(21) Anmeldenummer: 87100542.7

(22) Anmeldetag: 16.01.87

(51) Int. Cl.4: **A61C 15/04**

(30) Priorität: 31.01.86 CH 371/86

(43) Veröffentlichungstag der Anmeldung:
09.09.87 Patentblatt 87/37

(84) Benannte Vertragsstaaten:
CH DE FR IT LI

(71) Anmelder: **LES PRODUITS ASSOCIES LPA S.A.**
**39, rue Peillonnex**
**CH-1225 Chene-Bourg(CH)**

(72) Erfinder: **Moret, Michel-Antoine**
**28,Avenue de l'Aurore**
**CH-1225 Chene-Bourg(CH)**
Erfinder: **Jousson, Pierre-Jean**
**4, rue de Montchoisy**
**CH-1207 Genf(CH)**

(74) Vertreter: **Jörchel, Dietrich R.A. et al**
**c/o BUGNION S.A. 10, route de Florissant**
**Case postale 375**
**CH-1211 Genève 12 Champel(CH)**

(54) **Zahnseiden-Halter.**

(57) Der Zahnseidenhalter (10) ist als auswechselbares Aufsteckinstrument für ein Handgerät (1) ausgebildet, das einen Motor und eine von diesem oszillierend um ihre Achse antreibbare Welle (7) hat. Der Zahnseiden-Halter (10) hat gabelförmig angeordnete, gekrümmte Arme (13, 14) mit an diesen vorgesehenen Befestigungsstellen, zwischen denen die zum Reinigen der Zahnzwischenräume dienende Zahnseide (11) gespannt ist. Die gespannte Zahnseide - (11) liegt zur Drehachse (D) des Halters (10) windschief und ist gegenüber einer senkrecht zur Drehachse (D) orientierten Ebene geneigt. Die Befestigungsstelle am einen Arm (13) hat einen kleineren Abstand zur Drehachse (D) als die Befestigungsstelle am anderen Arm (14). Ferner schliesst das von der ersten Befestigungsstelle auf die Drehachse (D) gefällte Lot mit der senkrechten Projektion der beide Befestigungsstellen verbindenden Linie auf die zur Drehachse senkrechte Ebene, die durch dieses Lot geht, einen Winkel von wenigstens 90° ein.

**Fig.5**

**Fig.6**

## Zahnseiden-Halter

Die Erfindung bezieht sich auf einen Zahnseiden-Halter mit zwei gabelförmig angeordneten Armen, zwischen deren Enden die Zahnseide spannbar ist.

Von Hand zu benutzende Zahnseiden-Halter dieser Art zur Reinigung der Zahnzwischenräume sind seit langer Zeit bekannt, werden jedoch wegen der umständlich durchzuführenden Manipulationen noch nicht so häufig verwendet, wie das im Hinblick auf eine gute Zahnhygiene wünschenswert wäre.

Ferner sind Handgeräte zur Zahn-und Mundpflege mit auswechselbar aufsteckbaren Zahnbürsten und gegebenenfalls Aufsteckdüsen zur Flüssigkeitsbehandlung in verschiedenen Ausführungsformen bekannt. So werden in der US-PS 2.917.758 und in der CH-PS 646.554, entsprechend DE-OS 3.025.675, Handgeräte mit einem elektrischen Schwingankermotor beschrieben, der an ein Wechselspannungsnetz anschliessbar ist und das aufgesteckte Behandlungsinstrument mit der Frequenz dieses speisenden Netzes antreibt, wobei mit steigender Motorbelastung die Schwingungsamplitude abnimmt. Es sind auch bereits Handgeräte mit einem Schwingankermotor dieser Art bekannt, bei denen die Schwingungsamplitude mittels eines Einstellknopfes durch Aenderung der Motorspeisespannung verändert werden kann, indem im Motorkreis Widerstände ein-bzw. ausgeschaltet oder eingestellt werden.

Ein anderes bekanntes Handgerät arbeitet mit einem rotierenden Motor, der das Behandlungsinstrument über einen Bewegungswandler oszillierend antreibt, wobei die Schwingungsamplitude mittels eines verstellbaren Exzentermechanismus mechanisch verändert werden kann, wie beispielsweise in der CH-PS 636.509, entsprechend DE-OS 2.944.391, beschrieben.

Desweiteren sind hydraulisch angetriebene Handgeräte dieser Art bekannt, wie sie beispielsweise in der DE-PS 1.802.838 oder in der CH-PS 601.664, entsprechend DE-OS 2.634.315 beschrieben werden. Hierbei ist im Handgerätgehäuse ein hydraulischer Kolbenmotor vorgesehen, der von einer äusseren Flüssigkeitspumpe gespeist wird; wahlweise sind auf diese Handgeräte auch Spritzdüsen aufsetzbar, die anstelle des hydraulischen Motors an die Flüssigkeitspumpe angeschlossen werden können und einen pulsierenden Flüssigkeitsstrahl zur Flüssigkeitsbehandlung ausstossen. Ein Einstellknopf zur Veränderung des Flüssigkeitsdrucks erlaubt beim Betrieb des hydraulischen Motors die Einstellung der Schwingungsamplitude.

Der Erfindung liegt die Aufgabe zugrunde, einen Zahnseiden-Halter so auszubilden, dass er als mechanisch angetriebenes Behandlungsinstrument mit einem Handgerät der vorstehend beschriebenen Art wirkungsvoll betrieben werden kann und dabei eine zu starke Beanspruchung oder gar Verletzung des Zahnschmelzes oder des Zahnfleischs durch die Reibung der schnell - schwingenden Zahnseide vermieden wird.

Diese Aufgabe wird erfindungsgemäss durch die im Patentanspruch 1 angegebenen Merkmale gelöst.

Indem ein solcher, als Aufsteckinstrument ausgebildeter Zahnseiden-Halter mit einem Handgerät der eingangs be schriebenen Art verwendet wird, welches diesen Halter oszillierend um seine Drehachse antreibt, steht dem Benutzer ein einfach zu bedienendes und wirkungsvoll arbeitendes Instrument zur Reinigung der Zahnzwischenräume zur Verfügung. Die gespannte Zahnseide wird dabei in einem Zahnzwischenraum mit der Frequenz des antreibenden Motors, also im Falle eines Elektromotors mit 50 Hz oder im Falle eines hydraulischen Motors mit einer Frequenz von 40 bis 60 Hz, oszillierend bewegt und überstreicht dabei aufgrund der besonderen Geometrie des Halters eine Rotationshyperboloid-Fläche. Es wird dadurch vermieden, dass die während einer Schwingungsperiode von der Zahnseide überstrichene Fläche eine X-förmige oder V-förmige Gestalt hat, das heisst, die durch die momentanen Stellungen des periodisch bewegten Zahnseidenfadens definierten Geraden schneiden sich nicht und bilden daher keinen gemeinsamen Kreuzungspunkt oder Knotenpunkt, an welchem die lokale Reibwirkung besonders stark und daher gefährlich wäre. Ebenso wird ein Sägeeffekt vermieden, da die Schwingung der Zahnseide im Winkel zur Längsrichtung der gespannten Zahnseide stattfindet.

Besonders vorteilhaft ist es ausserdem, wenn die Schwingungsamplitude, mit der das Handgerät arbeitet, einstellbar ist oder mit zunehmender Motorbelastung abnimmt. So kann im Falle einer Einstellbarkeit der Schwingungsamplitude bei Benutzung eines Zahnseiden-Halters mit einer geringeren Schwingungsamplitude, beispielsweise von 10 bis 40°, als bei Verwendung einer Zahnbürste gearbeitet werden, damit die Gefahr möglicher Reizungen oder Verletzungen des Zahnfleisches noch weiter herabgesetzt wird. Dagegen ist zur Massage des gesunden Zahnfleisches eine Schwingungsamplitude der Zahnbürste zwischen 40° und 70° vorteilhaft. Da im übrigen bei den Handgeräten der eingangs beschriebenen Art die Schwingungsamplitude mit steigender Motorbelastung abnimmt, wird bei stärkerem Andrücken der Zahnseide an die Zähne die Schwingungsamplitude automatisch herabgesetzt.

In einer vorteilhaften Ausgestaltung beträgt der erwähnte Neigungswinkel $\alpha$ zwischen 10° und 40°, vorzugsweise etwa 20°, der Abstand R1 zwischen 8 und 20 mm, vorzugsweise etwa 12 mm, der Abstand R2 zwischen 15 und 45 mm, vorzugsweise etwa 25 mm, und der Winkel $\beta$ zwischen 95° und 150°, vorzugsweise etwa 110°.

Weitere zweckmässige Ausgestaltungen der Erfindung ergeben sich aus den abhängigen Ansprüchen.

Die Erfindung wird anhand der Zeichnungen an mehreren Ausführungsbeispielen erläutert. Es zeigen:

Figur 1 ein Handgerät mit auf das Gerätegehäuse aufgesetztem Zahnseiden-Halter, wobei im betrachteten Beispiel dieses Handgerät mit einem hydraulischen Motor ausgerüstet und daher an eine Flüssigkeitspumpe angeschlossen ist,

Figur 2 eine Draufsicht auf den Zahnseiden-Halter, wobei der gekrümmte Doppelpfeil die Schwingungsrichtung veranschaulicht,

Figur 3 eine Seitenansicht des Zahnseiden-Halters nach Figur 1, etwas gegenüber der Darstellung nach Figur 1 vergrössert,

Figur 4 denselben Zahnseiden-Halter in einer um 90° um seine Achse gedrehten Stellung,

Figur 5 eine schematische Darstellung zur Veranschaulichung der Geometrie des Zahnseiden-Halters und seiner Schwingung, in der Draufsicht,

Figur 6 eine Seitenansicht in Richtung der Pfeile VI nach Figur 5, gegenüber der Darstellung nach Figur 5 verkleinert,

Figur 7 eine Variante des Zahnseiden-Halters,

Figur 8 einen Schnitt längs der Linie VIII nach Figur 7 durch die Seidenspann-und Befestigungsvorrichtung und

Figur 9 eine weitere Variante des Zahnseiden-Halters.

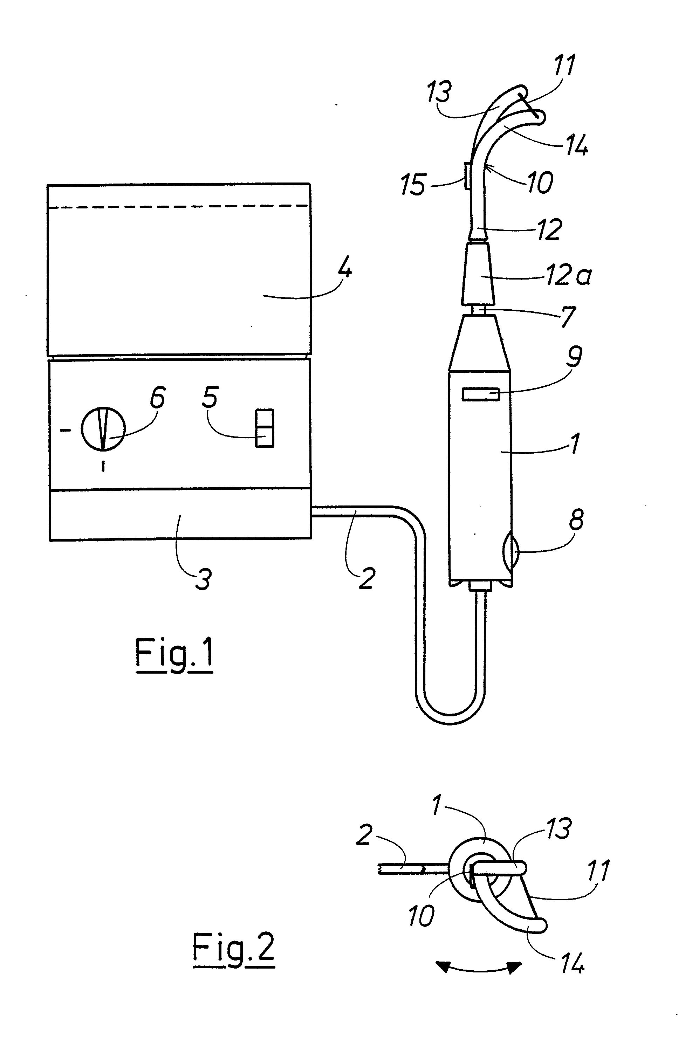

Nach Figur 1 ist das Gehäuse eines Handgeräts 1 zur Zahnpflege, welches mit einem hydraulischen Kolbenmotor ausgerüstet ist, über einen Doppelschlauch 2 mit einer Hin-und einer Rückleitung für die Flüssigkeit an eine Flüssigkeitspumpe 3 angeschlossen, auf der ein abnehmbares Flüssigkeitsreservoir 4 sitzt. An der Flüssigkeitspumpe 3 sind ein Ein-Aus-Schalter 5 für den die Pumpe antreibenden elektrischen Motor und ein Drehknopf 6 zur Einstellung des Flüssigkeitsdruckes angebracht.

Im Gehäuse des Handgeräts 1 ist eine in dessen Achse verlaufende Welle 7 drehbar gelagert, die am oberen Gehäuseende herausragt und auf welche auswechselbar Aufsteckinstrumente aufsetzbar sind. Figur 1 zeigt als Aufsteckinstrument einen aufgesetzten Zahnseiden-Halter 10 mit einer an seinem Stiel 12 angeformten Steckvorrichtung 12a und mit gabelförmig angeordneten, gekrümmten Armen 13 und 14, zwischen deren Enden die zur Säuberung der Zahnzwischenräume dienende Zahnseide 11 gespannt ist.

Die Welle 7 und damit der Zahnseiden-Halter 10 werden durch den hydraulischen Motor oszillierend angetrieben und in eine Schwingbewegung um die Achse der Welle 7 versetzt, wie es der gekrümmte Doppelpfeil in Figur 2 veranschaulicht. Diese oszillierende Bewegung der Welle 7 wird, wenn der hydraulische Motor einen linear hinund hergehenden Kolben aufweist, mittels eines geeigneten Bewegungswandlers erzeugt, wie das beispielsweise in der DE-PS 1.802.838 beschrieben ist. Das Handgerät 1 kann jedoch auch mit einem hydraulischen Kolbenmotor ausgerüstet sein, dessen Kolben in Hubrichtung kreisbogenförmig gekrümmt ist; dieser Kolben ist direkt an der Welle 7 mittels eines radialen Ansatzes befestigt und wird längs eines zur Welle 7 konzentrischen Kreisbogens hin-und hergehend angetrieben. Ein Handgerät mit einem derartigen Hydraulikantrieb ist in der CH-PS 601.664 entsprechend DE-OS 2.634.315 beschrieben und benötigt keinen Bewegungswandler zwischen hydraulischem Motor und angetriebener Welle, da der hydraulische Kolben die Welle direkt in eine oszillierende Bewegung um ihre Achse versetzt.

Das in Figur 1 gezeigte Handgerät mit hydraulischem Antrieb kann auch, wie die in der Einleitung erwähnten bekannten Handgeräte, mit einer aufgesteckten Zahnbürste oder einer Spritzdüse betrieben werden, die im aufgesetzten Zustand an eine neben dem hydraulischen Motor verlaufende Leitung angeschlossen ist. Mit einem am Gehäuse des Handgeräts 1 angebrachten Einstellknopf 8 ist ein Dreiwegeventil einstellbar, mit welchem die von der Flüssigkeitspumpe 3 kommende Flüssigkeitsleitung entweder, zwecks Antriebs eines Zahnseiden-Halters 10 oder einer Zahnbürste, mit dem Zylinder des hydraulischen Motors oder aber, zwecks Speisung einer Spritzdüse, mit der zu dieser Spritzdüse führenden Leitung verbunden wird, so dass die Spritzdüse einen pulsierenden Flüssigkeitsstrahl zur Zahnreinigung und zur Massage des Zahnfleisches ausstösst. Ein weiterer Einstellknopf 9 am Handgerät 1 betätigt ein Ventil, mit welchem entweder die zur Flüssigkeitspumpe 3 zurückführende Flüssigkeitsrückleitung gesperrt oder mit der Flüssigkeitsspeiseleitung verbunden wird. Im ersten Falle ist das Handgerät 1 eingeschaltet, es wird also entweder der hydraulische Motor angetrieben oder die Spritzdüse gespeist, und im zweiten Falle ist das Handgerät abgeschaltet, da die ·Flüssigkeitspumpe über die Flüssigkeitsspeiseleitung, das erwähnte Ventil und die Flüssigkeitsrückleitung kurzgeschlossen ist.

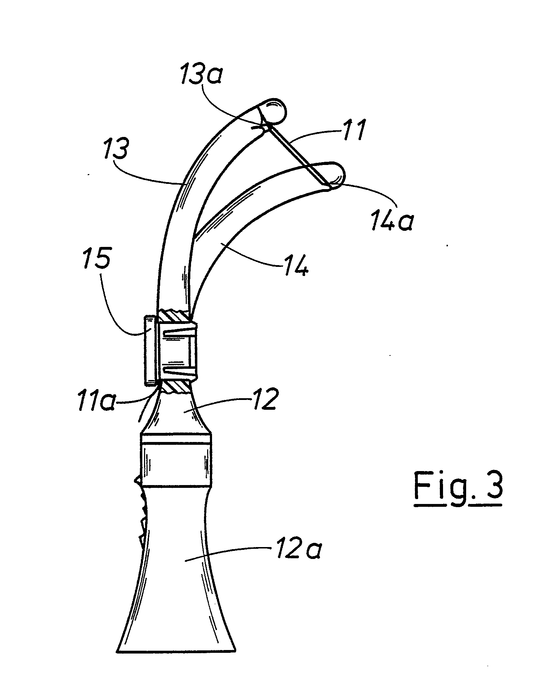

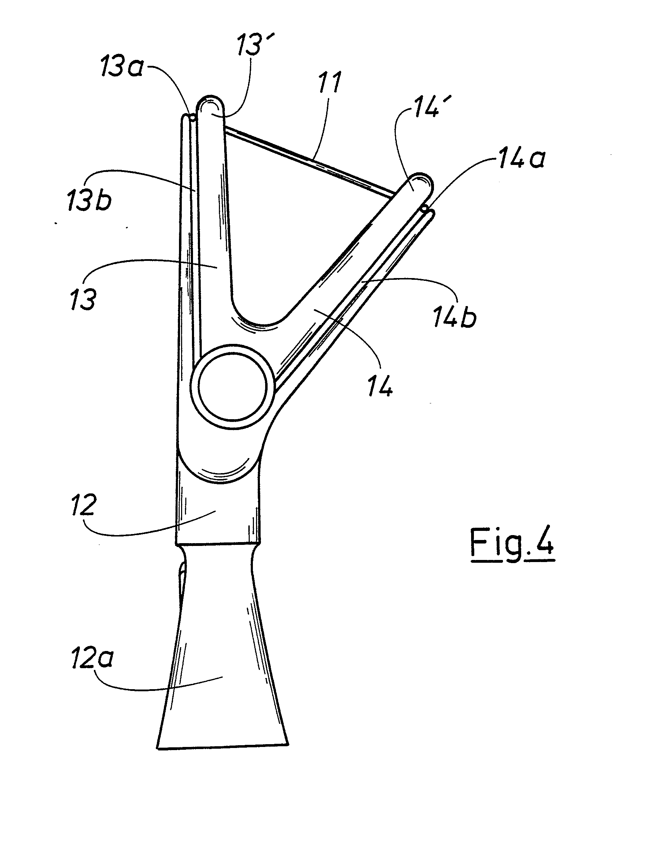

Figuren 3 und 4 zeigen den Zahnseiden-Halter 10 nach Figur 1 in vergrösserter Darstellung. Dieser gabelförmige Halter 10 hat einen Stiel 12, dessen unteres Ende mit der Steckvorrichtung 12a zum Aufstecken auf die Welle 7 des Handgeräts 1 versehen ist, und am oberen Teil angeformte, umsymmetrisch ausgebildete Arme 13 und 14, die von· der Längsachse des Stiels 12 weg nach der gleichen Seite hin gekrümmt sind und V-förmig divergieren. Beide Arme 13 und 14 sind in verschiedenen Ebenen mit unterschiedlichen Krümmungen gebogen. Im betrachteten Beispiel liegt der gekrümmte Arm 13 in einer etwas parallel zur Drehachse D versetzten Ebene, wie es Figur 2 veranschaulicht, während der gekrümmte Arm 14 in einer zur Drehachse D geneigten Ebene liegt. Der Arm 13 kann auch in einer durch die Drehachse gehenden Ebene liegen. Beide Arme können auch unterschiedlich abgewinkelt sein.

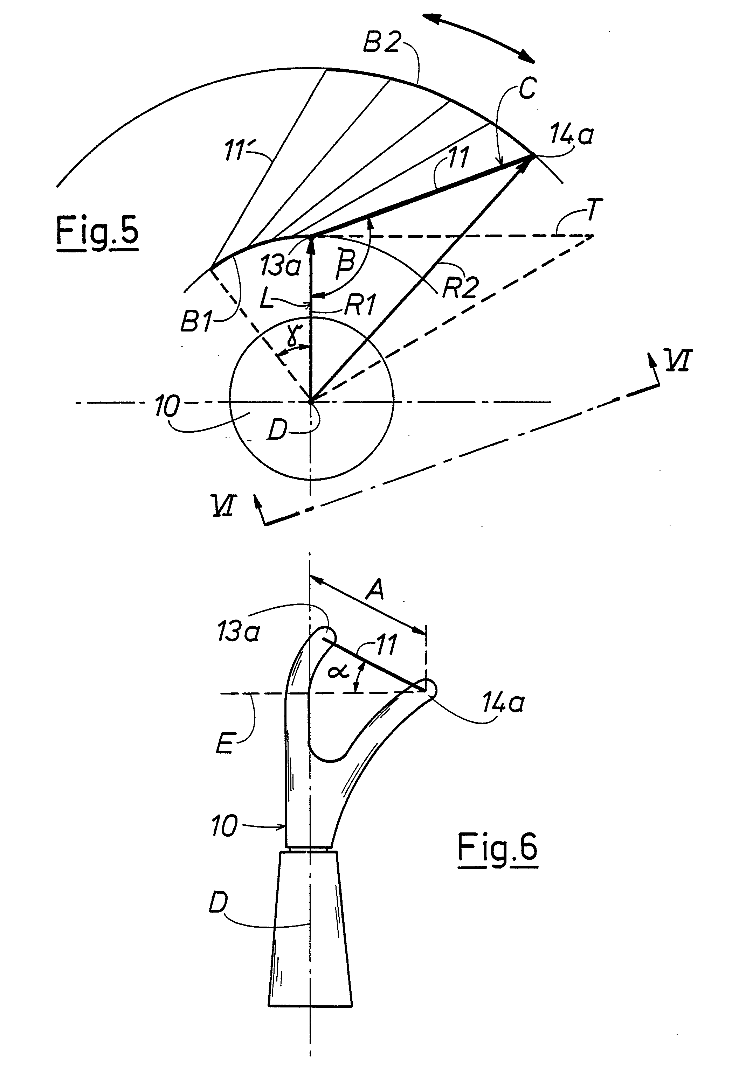

Zwischen den abgerundeten Enden (13', 14') der beiden Arme 13 und 14 ist die gestrichelt angedeutete Zahnseide 11 gespannt. Die Arme 13 und 14 weisen Längsnuten 13b und 14b auf, in denen die Zahnseide zu den Armenden hin geführt wird und die in Einkerbungen münden. Diese Einkerbungen bilden die Befestigungsstellen 13a, 14a für die Zahnseide 11, die so in definierter Weise längs des Geradenabschnitts A (Figur 6) gespannt werden kann. Die freien Enden 11a der Zahnseide sind zwecks Befestigung um einen am Stiel 12 vorgesehenen Knopf 15 gewickelt.

Die insbesondere in den Figuren 5 und 6 veranschaulichte Geometrie des Zahnseiden-Halters 10 ist folgendermassen gewählt: Die durch die gespannte Zahnseide 11 verlaufende Gerade liegt zu der durch die Drehachse D des Halters 10 gehenden Geraden windschief und ist gegen eine zu dieser Drehachse senkrecht orientierte Ebene E um einen Winkel $\alpha$ geneigt, wie die Darstellung nach Figur 6 veranschaulicht; in Fig. 6 liegen die beiden Befestigungsstellen 13a und 14a in einer parallel zur Zeichenebene orientierten Ebene.

Nach Figur 5, welche eine schematische Draufsicht auf die Anordnung, also in Richtung der Drehachse D des Halters 10, zeigt, ist der Abstand R1 der Befestigungsstelle 13a zur Drehachse D kleiner als der Abstand R2 der Befestigungsstelle 14a zur Drehachse D. Um zu verhindern, dass sich die momentanen Stellungen der gespannten Zahnseide 11 während einer Schwingung kreuzen und dadurch bei der Behandlung Stellen auftreten,die einer besonders hohen Reibwirkung unterliegen, muss, wie man sich anhand der Figur 5 leicht klarmachen kann, folgende Bedingung erfüllt sein: Das von der Befestigungsstelle 13a am Arm 13 auf die Drehachse D gefällte Lot L der Länge R1 muss mit der Linie C einen Winkel $\beta$ einschliessen, der wenigstens 90° beträgt; die Linie C ist die Projektion A cos$\alpha$ des Geradenabschnitts A, also der gespannten Zahnseide 11 , auf die zur Drehachse senkrechte Ebene, die durch das Lot L geht.

Zweckmässigerweise wird der Winkel $\alpha$ zwischen 10° und 40°, der Winkel $\beta$ zwischen 95° und 150°, der Abstand R1 zwischen 8 und 20 mm und der Abstand R2 zwischen 15 und 45 mm gewählt. Ein bevorzugtes Ausführungsbeispiel weist ungefähr die folgenden Werte auf: $\alpha$ = 20°, $\beta$ = 110°, R1 = 12 mm und R2 = 25 mm. Die vorstehenden Radien und Winkel werden zweckmässigerweise so gewählt, dass der Geradenabschnitt A, also die Länge der gespannten Zahnseide, ungefähr 15 bis 40 mm, vorzugsweise etwa 25 mm, beträgt.

Während einer Schwingung beschreibt jeder Punkt der gespannten Zahnseide 11, wie durch einen Doppelpfeil in Figur 5 angedeutet, einen zur Drehachse D konzentrischen Kreisbogen, und die von der gespannten Zahnseide 11 überstrichene Fläche ist in der Draufsicht nach Figur 5, bei einem Schwingungswinkel $\gamma$, durch die zur Drehachse D konzentrischen beiden Kreisbögen B1 und B2 mit dem Radius R1 bzw. R2 und durch die mit 11 und 11' bezeichneten Extremstellungen der Zahnseide begrenzt. Diese von der Zahnseide 11 überstrichene Fläche stellt einen Flächenabschnitt eines Rotationshyperboloids dar. Dadurch wird der jeweils im Zahnzwischenraum befindliche Abschnitt der schwingenden Zahnseide 11, bei unveränderter Lage des Halters 10, auch in Richtung der Drehachse D, also senkrecht zur eigentlichen Schwingbewegung, oszillierend hin-und herbewegt, was für die Reinigungswirkung besonders zweckmässig ist und einen Sägeeffekt vermeidet.

Würde der Winkel $\beta$ exakt 90° betragen, dann bildete die erwähnte Projektion C = A cos$\alpha$ gerade die Tangente T an den mit dem Radius R1 um die Drehachse D geschlagenen Kreis durch die Befestigungsstelle 13a. Da, wie ohne weiteres aus Figur 5 ersichtlich, die Beziehung R2² = R1² + T² gilt, ist die Bedingung B≥90° gleichbedeutend mit der Bedingung, dass

$$C \leq \sqrt{R2^2 - R1^2} .$$

Wenn diese Bedingung nicht erfüllt ist, also $\beta$ < 90°, schneidet die Projektion C = A cos$\alpha$ den kleineren Kreis mit dem Radius R1, und benachbarte momentane Stellungen der schwingenden Zahnseide 11 kreuzen einander, was, wie früher ausgeführt, vermieden werden soll.

Im Falle eines hydraulisch angetriebenen Handgeräts 1 nach Figur 1 kann der Benutzer mit dem Drehknopf 6 den Flüssigkeitsdruck und damit die Energie des hydraulischen Motors einstellen, so dass auf diese Weise die Schwingungsamplitude des angetriebenen Aufsteckinstruments verändert werden kann. Auch nimmt bei verringertem Flüssigkeitsdruck die Schwingungsamplitude mit steigender Belastung des Aufsteckinstruments verhältnismässig rasch ab. Daher kann beispielsweise eine Zahnbürste mit maximalem Flüssigkeitsdruck betrieben werden, während bei Benutzung eines Zahnseiden-Halters 10 mit entsprechend verringertem Flüssigkeitsdruck und verkleinerter Schwingungsamplitude gearbeitet wird, um Verletzungen zu vermeiden. Je stärker die Zahnseide ausserdem beim Reinigen der Zahnzwischenräume durch Anpressen gegen die Zähne belastet wird, umso mehr nimmt die Schwingsamplitude ab, was ebenfalls bei dieser Anwendung ein wünschenswerter Effekt ist, um bei Berührung mit dem Zahnfleisch eine Reizung desselben so gering wie möglich zu halten.

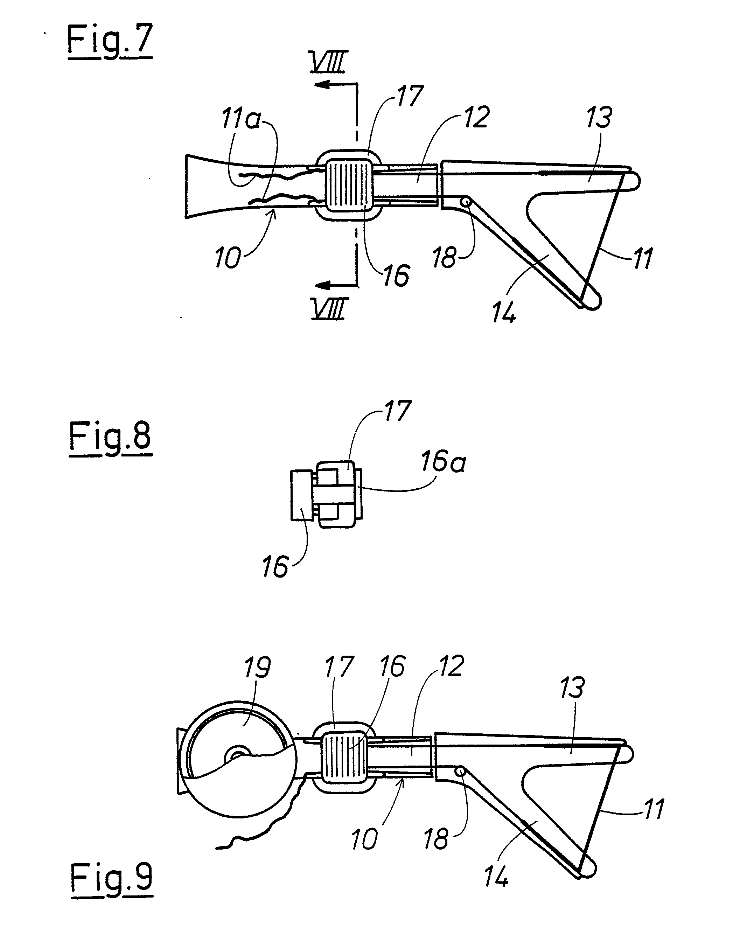

Im Beispiel nach den Figuren 7 und 8 ist der Zahnseiden-Halter 10, dessen Arme 13 und 14 wiederum Nuten und Einkerbungen zum Führen der Zahnseide 11 aufweisen, mit einer Spann-und Befestigungsvorrichtung für die Zahnseide 11 sowie einem die Zahnseide vom Arm 14 in Richtung des Stiels 12 umlenkenden Stift 18 versehen. Diese Vorrichtung besteht aus einem am Stiel 12 befestigten oder angeformten topfförmigen Körper 17 und einem darin in dessen Achsenrichtung hin- und herbeweglichen Spannknopf 16, der eine Oeffnung im Boden des Körpers 17 bzw. im Stiel 12 durchsetzt. Nachdem die Enden 11a der Zahnseide 11 unter dem Kopf des Spannknopfs 16 hindurchgeführt worden sind, wird dieser Spannknopf 16 in den Körper 17 eingedrückt, wodurch die Zahnseide 11 gespannt und gleichzeitig deren Enden 11a festgehalten werden. Zum Lösen der Zahnseide wird der Spannknopf 16 durch Druck auf die an seiner anderen Seite angeformte Scheibe 16a aus dem Körper 17 herausgedrückt, wie in Figur 8 gezeigt.

Im Beispiel nach Figur 9 ist der Halter 10 nach Figur 7 ausserdem noch mit einer Vorratsspule 18 für die Zahnseide 11 versehen, so dass auf einfache Weise der Abschnitt der benutzten Zahnseide durch einen neuen Ab schnitt aus der Vorratsspule 18 ersetzt und mittels der Vorrichtung 16, 17 gespannt und befestigt werden kann.

Anstelle einer mit einem Druckknopf arbeitenden Spann-und Befestigungsvorrichtung kann auch eine Schraube vorgesehen sein, die die Enden der Zahnseide durch Eindrehen in eine im Stiel des Halters vorgesehene Gewindeöffnung spannt und fixiert.

Die vorstehend beschriebenen Vorrichtungen können natürlich auch bei dem an Hand der Figuren 1 bis 6 beschriebenen Ausführungsbeispiel anstelle des Knopfs 15 vorgesehen sein, wobei ein besonderer Stift zum Umlenken der Zahnseide entfällt, da die Führungsnuten 13b, 14b an den Armen beide in Richtung auf diese Vorrichtung verlaufen.

Anstelle eines hydraulisch angetriebenen Handgeräts kann natürlich auch ein elektrisch angetriebenes Handgerät mit einem Elektromotor verwendet werden, wie es beispielsweise in der US-PS 2.917.758 oder in der CH-PS 646.554, entsprechend DE-OS 3.025.675, beschrieben ist. Bei diesen im Gehäuse des Handgeräts installierten Elektromotoren handelt es sich um Schwingankermotoren, deren Anker, bei Anschluss des Motors an ein Wechselspannungsnetz, mit der Frequenz dieses Wechselspannungsnetzes oszilliert. Die das Aufsteckinstrument antreibende Welle ist direkt am Motoranker befestigt. Bei diesen Motortypen nimmt die Schwingungsamplitude des Ankers mit steigender Belastung ab, was, wie vorstehend erwähnt, beim Gebrauch eines Zahnseiden-Halters vorteilhaft ist. Ausserdem ist es bekannt, derartige elektrisch betriebene Handgeräte zwecks Aenderung der Speisespannung des Motors und damit der Schwingungsamplitude mit einstellbaren oder veränderbaren Widerständen oder anderen, die Spannung verändernden Elementen auszurüsten, so dass der Benutzer nach Bedarf die Schwingungsamplitude verringern kann, wenn er den Zahnseidehalter benutzt.

Schliesslich ist auch ein bekanntes Handgerät, welches eine von einem rotierenden Kleinmotor über einen Bewegungswandler oszillierend angetriebene Welle und eine mechanische Vorrichtung zur Einstellung der Schwingungsamplitude aufweist, dazu geeignet, mit einem aufgesetzten Zahnseiden-Halter nach der Erfindung betrieben zu werden. Ein derartiges Handgerät mit mechanisch einstellbarer Schwingungsamplitude des angetriebenen Aufsteckinstruments ist in der CH-PS 636.509, entsprechend DE-OS 2.944.391, beschrieben.

### Ansprüche

1. Zahnseiden-Halter mit zwei gabelförmig angeordneten Armen (13, 14), zwischen den die Zahnseide (11) längs eines Geradenabschnitts (A) spannbar ist, wobei die Lage der gespannten Zahnseide (11) durch an den Armen (13, 14) vorgesehene Befestigungsstellen (13a, 14a) definiert ist, dadurch gekennzeichnet, dass der Halter (10) als Aufsteckinstrument für ein Handgerät (1) zur Zahnpflege ausgebildet ist, welches eine drehbar gelagerte Welle (7) für das Aufsteckinstrument und einen diese Welle oszillierend um ihre Achse antreibenden Motor aufweist, dass die durch den Geradenabschnitt (A) verlaufende Gerade zur Drehachse (D) des Halters (10) windschief liegt und gegen eine zu dieser Drehachse senkrecht orientierte Ebene (E) um einen Winkel α geneigt ist, dass der Abstand (R1) zwischen der Befestigungsstelle (13a) am einen Arm (13) und der Drehachse (D) kleiner ist als der Abstand (R2) zwischen der Befestigungsstelle (14a) am anderen Arm (14) und der Drehachse (D), und dass das von der ersterwähnten Befestigungsstelle (13a) auf die Drehachse (D) gefällte Lot (L) mit der senkrechten Projektion (C) des Geradenabschnitts (A) auf die durch das Lot (L) gehende, zur Drehachse (D) senkrechte Ebene einen Winkel β einschliesst, der wenigstens 90° beträgt.

2. Zahnseiden-Halter nach Anspruch 1, dadurch gekennzeichnet, dass der Neigungswinkel α zwischen 10° und 40°, vorzugsweise etwa 20°, beträgt.

3. Zahnseiden-Halter nach Anspruch 1 oder 2, dadurch gekennzeichnet, dass R1 zwischen 8 und 20 mm, vorzugs weise etwa 12 mm, und R2 zwischen 15 und 45 mm, vorzugsweise etwa 25 mm beträgt und dass der Winkel β zwischen 95° und 150°, vorzugsweise etwa 110°, beträgt.

4. Zahnseiden-Halter nach einem der Ansprüche 1 bis 3, dadurch gekennzeichnet, dass beide Arme (13, 14) in verschiedenen Ebenen mit unterschiedlichen Krümmungen gebogen oder unterschiedlich abgewinkelt sind.

5. Zahnseiden-Halter nach Anspruch 4, dadurch gekennzeichnet, dass der eine gekrümmte Arm (13) in einer Ebene liegt, die parallel zur Drehachse (D) des Halters (10) orientiert ist oder in welcher diese Drehachse verläuft, und der andere gekrümmte Arm (14) in einer zu dieser Drehachse (D) geneigten Ebene liegt.

6. Zahnseiden-Halter nach einem der Ansprüche 1 bis 5, dadurch gekennzeichnet, dass die Arme (13, 14) abgerundete Enden (13', 14') haben.

7. Zahnseiden-Halter nach einem der Ansprüche 1 bis 6, dadurch gekennzeichnet, dass die Zahnseide (11) längs der Arme (13, 14) in Nuten (13b, 14b) geführt ist, welche in Einkerbungen münden die Befestigungsstellen (13a, 14a) bilden.

8. Zahnseiden-Halter nach einem der Ansprüche 1 bis 7, dadurch gekennzeichnet, dass er mit einer Spann-und Befestigungsvorrichtung für die Zahnseide (11) versehen ist, welche aus einem topfförmigen Körper (17) und einem dazu koaxialen, in Achsenrichtung beweglichen Knopf (16) besteht, der in seiner Spannstellung ins Innere des topfförmigen Körpers (17) eingedrückt ist.

9. Zahnseiden-Halter nach einem der Ansprüche 1 bis 8, dadurch gekennzeichnet, dass er eine Spann-und Befestigungsvorrichtung aufweist, die aus einer in eine Gewindeöffnung seines Stiels eindrehbaren Schraube besteht.

10. Zahnseiden-Halter nach einem der Ansprüche 1 bis 9, dadurch gekennzeichnet, dass er mit einer Vorratsspule (19) für die Zahnseide ausgerüstet ist.

Fig.1

Fig.2

_Fig. 3_

13a
13´
11
14´
14a
13b
13
14b
14
12
12a

**Fig.4**

0 235 518

Fig.5

Fig.6

Fig.7

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 421 524 (WATERS) <br> * Spalte 1, Zeile 63 - Spalte 2, Zeile 45; Figur 1 * | 1,10 | A 61 C 15/04 |
| A | US-A-3 534 745 (WATERS) <br> * Ansprüche 1-3 * | 1 | |
| A | US-A-4 338 957 (MEIBAUER) <br> * Spalte 8, Zeile 3 - Spalte 9, Zeile 13; Figuren 1-5 * | 1 | |
| A | US-A-4 004 597 (KUPPERMAN et al.) <br> * Figuren 2, 4-6 * | 1,6-8 | |

| RECHERCHIERTE SACHGEBIETE (Int. Cl.4) |
|---|
| A 61 C 15/00 <br> A 61 C 17/00 |

Der vorliegende Recherchenbericht wurde für alle Patentansprüche erstellt.

| Recherchenort | Abschlußdatum der Recherche | Prüfer |
|---|---|---|
| BERLIN | 24-04-1987 | SIMON J J P |